(19) Europäisches Patentamt

European Patent Office

Office européen des brevets

(11) Veröffentlichungsnummer: **0 552 140 B1**

# (12) EUROPÄISCHE PATENTSCHRIFT

(45) Veröffentlichungstag der Patentschrift: **25.10.95**

(51) Int. Cl.⁶: **B60K 6/04**

(21) Anmeldenummer: **93890003.2**

(22) Anmeldetag: **11.01.93**

(54) **Antriebsvorrichtung.**

(30) Priorität: **16.01.92 AT 61/92**

(43) Veröffentlichungstag der Anmeldung:
**21.07.93 Patentblatt 93/29**

(45) Bekanntmachung des Hinweises auf die
Patenterteilung:
**25.10.95 Patentblatt 95/43**

(84) Benannte Vertragsstaaten:
**AT DE FR GB IT SE**

(56) Entgegenhaltungen:
**WO-A-82/00270**
**DE-A- 2 353 724**

(73) Patentinhaber: **AVL Gesellschaft für Verbrennungskraftmaschinen und Messtechnik
mbH.Prof.Dr.Dr.h.c. Hans List
Kleiststrasse 48
A-8020 Graz (AT)**

(72) Erfinder: **Kriegler, Wolfgang, Dipl.-Ing.
Kollnitzer-Weg 17
A-9470 St. Paul i.Lavanttal (AT)**
Erfinder: **Rasser, Michael, Dipl.-Ing.
Popelkaring 94
A-8045 Graz (AT)**
Erfinder: **Reisinger, Erwin, Dipl.-Ing. Dr.
Pestalozzistrasse 3
A-8010 Graz (AT)**

(74) Vertreter: **Krause, Walter, Dr. Dipl.-Ing. et al
Dipl.-Ing. Dr. Walter Krause,
Dipl.-Ing. Peter Kliment,
Singerstrasse 8,
Postfach 200
A-1014 Wien (AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Antriebsvorrichtung mit einer überwiegend stationär betriebenen Brennkraftmaschine und einer transient betriebenen selbständigen Arbeitsmaschine, welche über eine erste und eine zweite Antriebswelle auf die Abtriebswelle eines Planetengetriebes arbeiten.

Eine Antriebsvorrichtung der eingangs genannten Art ist aus der DE-AS 23 53 724 bekannt geworden. Hier wird ein Hybrid-Antrieb mit zwei über ein Leistungsverzweigungsgetriebe auf die Abtriebswelle arbeitenden Antriebsmaschine gezeigt. Die überwiegend stationär betriebene Arbeitsmaschine, beispielsweise eine Brennkraftmaschine, ist hinsichtlich ihres Regelverhaltens träger ausgelegt, bzw. hinsichtlich des zu regelnden Drehzahl- und Drehmomentbereiches enger begrenzt als die transiente Arbeitsmaschine und stellt im wesentlichen eine gleichbleibende Grundlast für den Antrieb zur Verfügung. Diese Arbeitsmaschine treibt mittels ihrer Abtriebswelle, der die Energie eines Gyrospeichers zugeschaltet ist, das Sonnenrad eines Planetengetriebes, auf dessen mit der Abtriebswelle verbundenen Steg Planetenräder gelagert sind, die mit einem Kronenrad im Eingriff stehen. Das Kronenrad ist über ein Untersetzungsgetriebe und eine Trennkupplung mit einer Elektromaschine als transient betriebene Arbeitsmaschine verbunden, welche mit einem Elektrospeicher im Energieaustausch steht.

Aus der WO-A1 82/00270 ist ein Antriebsaggregat für ein Fahrzeug bekannt geworden, welches unter anderem eine Arbeitsmaschine, ein Schwungrad, ein stufenlos variables Getriebe, ein Zwischengetriebeglied sowie ein Differentialgetriebe aufweist. Das stufenlos variable Getiebe umfaßt zwei einzeln im Antriebsaggregat angeordnete Hydrostatik-Einheiten, die beide wechselweise als Pumpe oder als Motor arbeiten können, je eine Welle als Getriebeanschluß aufweisen und mittels Hydraulikleitungen verbunden sind. Die Hydrostatikeinheiten sind somit voneinander abhängig; wenn eine Einheit als Pumpe betrieben wird, muß die andere Einheit als Motor betrieben werden und umgekehrt.

Der in der US-PS 3 923 115 geoffenbarte Hybridantrieb entspricht im wesentlichen der Antriebsvorrichtung der eingangs zitierten DE-AS 23 53 724. Auch hier sind zwei Arbeitsmaschinen, eine Brennkraftmaschine und ein Elektromotor, vorhanden, wobei eine Arbeitsmaschine über ihre Abtriebswelle zusätzlich einen Gyrospeicher mit Energie auflädt. Ein Gyrospeicher soll jedoch im Sinne der vorliegenden Anmeldung nicht als transient betriebe Arbeitsmaschine zu verstehen sein, da daraus nur die aus allfälligen vorangehenden Leistungsspitzen abgezweigte Energie kurzfristig wieder in das Antriebssystem zurückgeführt werden kann.

Schließlich weist das aus der US-PS 4 335 429 bekannte Antriebssystem eine Brennkraftmaschine und zwei Elektromotoren auf. Die kraftschlüssige Kombination dieser Antriebe erfolgt hier jedoch nicht durch ein Planetengetriebe, sondern durch einen einfachen Kupplungsmechanismus.

Nachteiligerweise kann mit den bekannten Antriebsvorrichtungen am Abtrieb kein von der Drehzahl unabhängiges, beliebiges Drehmoment zur Verfügung gestellt werden.

Aufgabe der Erfindung ist es, eine Antriebsvorrichtung der eingangs beschriebenen Art weiterzubilden, bei welcher die Abtriebsdrehzahl stufenlos und unabhängig vom anliegenden Drehmoment eingestellt werden kann.

Diese Aufgabe wird erfindungsgemäß dadurch gelöst, daß eine zusätzliche selbständige transient betriebene Arbeitsmaschine vorgesehen ist, welche mit der ersten Antriebswelle oder mit der Abtriebswelle des Planetengetriebes in einem festen Drehzahlverhältnis steht, daß die beiden transient betriebenen Arbeitsmaschinen mit einer Regeleinrichtung in Verbindung stehende Hydro- oder Elektromaschinen sind, wobei eine Einrichtung für einen hydraulischen oder elektrischen Kraftfluß zwischen den beiden transient betriebenen Arbeitsmaschinen vorgesehen ist, welche einen hydraulischen oder elektrischen Energiespeicher aufweist, und die beiden transient betriebenen Arbeitsmaschinen unabhängig voneinander betreibbar sind. Die zwei transient betriebenen Arbeitsmaschinen, angeordnet an zwei unterschiedlichen Wellen des Planetensatzes, werden so betrieben, daß das Drehmomentengleichgewicht des Planetensatzes in jedem Betriebspunkt erfüllt wird. Die Drehzahlen der beiden Arbeitsmaschinen sind dabei entsprechend den kinematischen Bedingungen eines Planetengetriebes einzustellen.

Durch die Möglichkeit, beispielsweise jede Elektromaschine unter Verwendung eines Energiespeichers sowohl als Generator als auch als Elektromotor zu verwenden bzw. die Drehrichtung umzukehren, ergeben sich bei der erfindungsgemäßen Antriebsvorrichtung eine Reihe von Betriebszuständen, wobei sowohl ein serieller als auch ein paralleler Hybridantrieb sowie auch alle Zwischenstufen realisiert werden können. Bei Verwendung von Hydromaschinen wird als Generator eine Pumpe für ein Hydraulikmedium und als Motor ein Hydromotor eingesetzt. Beide sind über Druckleitungen mit einem Druckspeicher als Energiespeicher verbunden.

Neben dem direkten mechanischen Kraftfluß über das Planetengetriebe, existiert somit ein elektrischer oder hydraulischer Kraftfluß zwischen den beiden transient betriebenen Arbeitsmaschinen, wobei dieser Kraftfluß über einen Speicher für die elektrische Energie (Batterie) bzw. über einen Druckspeicher führt.

In einer Weiterbildung der Erfindung ist vorgesehen, daß die überwiegend stationär betriebene Brennkraftmaschine zwei Betriebspunkte, nämlich einen Haupt- und einen Nebenbetriebspunkt, mit unterschiedlicher Leistungsabgabe aufweist.

Zur besseren Anpassung an bestimmte Betriebszustände ist in einer Weiterbildung der Erfindung zumindest die überwiegend stationär betriebene Brennkraftmaschine durch eine Kupplung vom Planetengetriebe abtrennbar. Ebenso können auch die transient betriebenen Arbeitsmaschinen durch Kupplungen trennbar angeordnet werden.

Weiters ist erfindungsgemäß vorgesehen, daß zumindest eine der Arbeitsmaschinen über eine Getriebestufe mit dem Planetengetriebe in Verbindung steht.

Zur Realisierung eines festen Übersetzungsverhältnisses mit einem hohen Wirkungsgrad können erfindungsgemäß Kupplungen vorgesehen sein, mit welchen zumindest eine Antriebswelle des Planetengetriebes feststellbar ist.

Ein weiteres festes Übersetzungsverhältnis mit hohem Wirkungsgrad ist erfindungsgemäß durch eine Kupplung realisierbar, mit welcher die zweite Antriebswelle mit der Abtriebswelle des Planetengetriebes drehfest verbindbar ist.

In einer besonders vorteilhaften Ausführungsvariante ist vorgesehen, daß die überwiegend stationär betriebene Brennkraftmaschine über Kupplungen mit dem Sonnenrad und die erste transient betriebene Arbeitsmaschine über eine Getriebestufe mit dem Kronenrad des Planetengetriebes in Verbindung stehen, sowie daß die zweite transient betriebene Arbeitsmaschine über eine Getriebestufe auf die Sonnenradwelle arbeitet.

Durch die erfindungsgemäße Antriebsvorrichtung wird ein Planeten CVT(Continuously Variable Transmission)-Getriebe realisiert, welches sich beispielsweise für den Einsatz in einem Hybridfahrzeug eignet.

Schließlich ist erfindungsgemäß vorgesehen, daß die Regeleinrichtung zum teilweise automatisierten Betrieb der Antriebsvorrichtung in einem Fahrzeug ein Microprozessorsystem aufweist, in welchem Kenndaten über alle Elemente der Antriebsvorrichtung abgelegt sind und welches eingangsseitig mit Sensoren zur Erfassung des Fahrzustandes des Fahrzeuges und des Ladezustandes des Energiespeichers sowie mit einer Eingabevorrichtung zur Eingabe von Betriebsparametern von außen, beispielsweise durch Telemetrie oder durch den Fahrer verbunden ist, sowie daß der Microprozessor ausgangsseitig mit Stellgliedern zur Regelung der Arbeitsmaschinen sowie für das Schalten der Kupplungen verbunden ist. Die Eingabe von Betriebsparametern kann beispielsweise über Funksignale oder Induktionsschleifen in der Fahrbahn erfolgen, welche Teil eines Verkehrsleitsystems sind.

Die Erfindung wird im folgenden anhand von schematischen Zeichnungen näher erläutert. Es zeigen:

Fig. 1    eine erfindungsgemäße Antriebsvorrichtung, und die

Fig. 2    bis 5 Ausführungsvarianten der Antriebsvorrichtung nach Fig. 1.

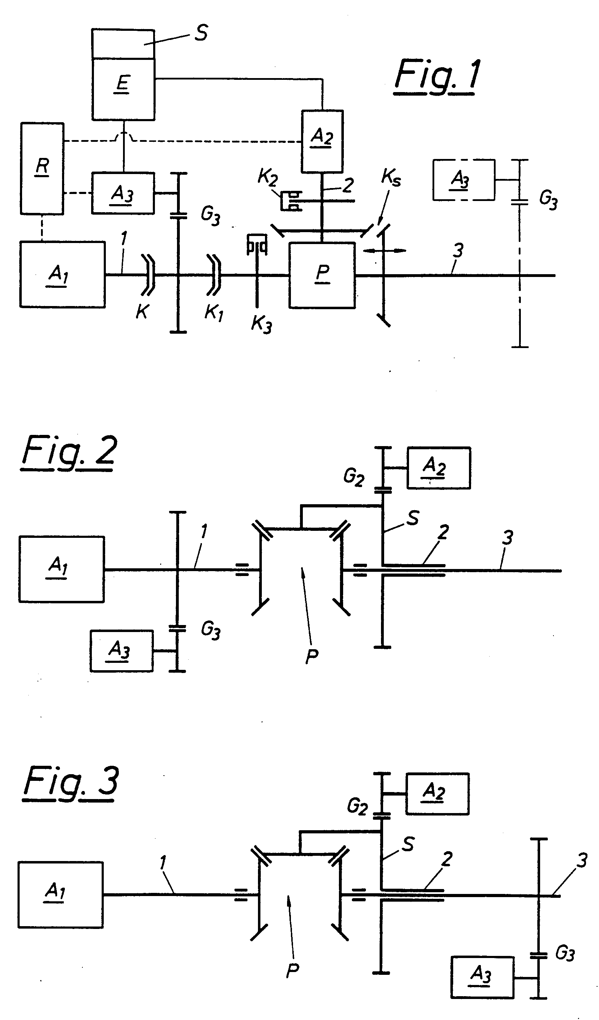

Die in Fig. 1 dargestellte Antriebsvorrichtung weist ein Planetengetriebe P mit einer ersten 1 und einer zweiten Antriebswelle 2 auf. Die Antriebswelle 1 ist mit einer überwiegend stationär betriebenen Brennkraftmaschine $A_1$ und die Antriebswelle 2 mit einer transient betriebene Arbeitsmaschine $A_2$ verbunden. Eine zusätzliche, transient betriebene Arbeitsmaschine $A_3$ kann entweder mit der Antriebswelle 1 oder mit der Abtriebswelle 3 (strichpunktiert gezeichnete Version) des Planetengetriebes P in einem festen Drehzahlverhältnis stehen. Dabei kann die Arbeitsmaschine $A_3$ entweder direkt auf der entsprechenden Welle angeordnet sein oder über ein Getriebe $G_3$ mit dieser in Verbindung stehen. Die Regeleinrichtung R umfaßt ein Microprozessorsystem zur Erfassung von Daten über den Fahrzustand eines Fahrzeuges und den Ladezustand eines Energiespeichers S. Das Microprozessorsystem ist mit Stellgliedern für die Arbeitsmaschinen $A_1$ bis $A_3$ und die weiter unten beschriebenen Kupplungen verbunden. Weiters ist eine Einrichtung E für einen elektrischen bzw. hydraulischen Kraftfluß zwischen den als Elektro- oder Hydromaschinen ausgeführten Arbeitsmaschinen $A_2$ und $A_3$ vorgesehen, sodaß ein Energieaustausch zwischen beiden Maschinen, unter Zwischenschaltung des Energiespeichers S (Batterie bzw. Druckspeicher), möglich ist.

Mit Hilfe der Kupplung K kann die Brennkraftmaschine $A_1$ vom Planetengetriebe abgekuppelt werden, durch Öffnen der Kupplung $K_1$ wird die gesamte Antriebseinheit aus $A_1$ und $A_3$ abgetrennt. Die Kupplungen $K_2$ und $K_3$ dienen zum Feststellen der Antriebswelle 2 und 1, die Kupplung $K_S$ zur drehfesten Verbindung der Antriebswelle 2 mit der Abtriebswelle 3 des Planetengetriebes P.

Bei den übrigen Ausführungsvarianten wurde die Bezeichnung der Antriebswellen mit 1 und 2 und der Abtriebswelle mit 3 beibehalten, wobei darauf hingewiesen wird, daß die einzelnen Wellen des Getriebes auch zyklisch vertauscht werden können.

In den Fig. 2 und 3 ist das Planetengetriebe P jeweils als Differentialgetriebe dargestellt, wobei die Arbeitsmaschine $A_2$ über ein Getriebe $G_2$ auf die Antriebswelle 2 des Stegrades S arbeitet. Die Fig. 2 und 3 unterscheiden sich durch die unterschiedliche Anordnung der Arbeitsmaschine $A_3$, welche in Fig. 2 mit der Antriebswelle 1 und in Fig. 3 mit der Abtriebswelle 3 in Verbindung steht.

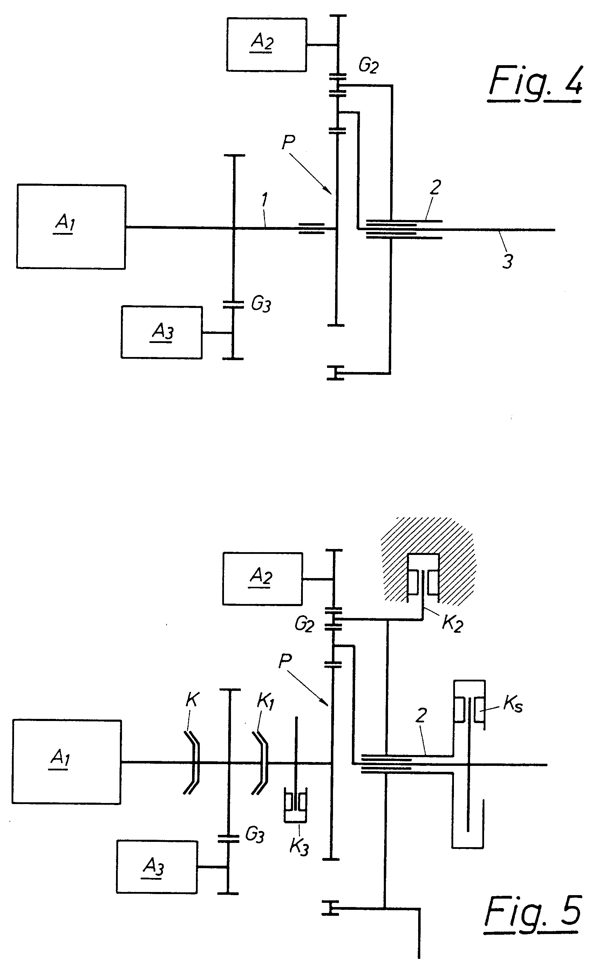

In den Ausführungsvarianten nach Fig. 4 und 5 ist die überwiegend stationär betriebene Brennkraftmaschine $A_1$ jeweils mit den Sonnenrad eines Planetengetriebes P verbunden, wobei direkt auf die Sonnenradwelle 1 auch die transient betriebene Arbeitsmaschine $A_3$ arbeitet. Die transient betriebene Arbeitsmaschine $A_2$ ist über eine Getriebestufe $G_2$ mit dem Kronenrad des Planetengetriebes P verbunden, wobei die Stegwelle als Abtriebswelle 3 fungiert. Zur Realisierung fester Drehzahlverhältnisse sind die Kupplungen $K_2$ und $K_S$ vorgesehen, wobei auch in dieser Ausführungsvariante mit der Kupplung $K_2$ die Antriebswelle 2 des Planetengetriebes feststellbar ist und mit der Kupplung $K_S$ die Antriebswelle 2 mit der Abtriebswelle 3 drehfest verbunden werden kann. Durch gleichzeitiges Feststellen der Kupplungen $K_2$ und $K_S$ kann beispielsweise die Abtriebswelle 3 festgehalten werden.

Durch Öffnen der Kupplung $K_1$ und Schließen der Kupplung K können die Arbeitsmaschinen $A_1$ und $A_3$ vom Getriebe abgetrennt werden, wodurch der mechanische Kraftfluß unterbrochen ist. Über die in den Fig. 2 bis 5 nicht dargestellte Einrichtung für einen elektrischen oder hydraulischen Kraftfluß samt Energiespeicher (siehe Fig. 1) kann jedoch in allen Ausführungsvarianten eine kraftschlüssige Verbindung zur Arbeitsmaschine $A_2$ und zur Abtriebswelle 3 hergestellt werden.

Die in den Fig. 1 und 5 dargestellten Kupplungen K, $K_1$, $K_2$, $K_3$ und $K_S$ sind sinngemäß auch bei allen anderen Ausführungsvarianten möglich.

Die Zustände der Kupplungen $K_1$, $K_2$, $K_3$ und K ergeben sechzehn mögliche Betriebszustände (Mode 1 bis 16) der Antriebsvorrichtung. In der Tabelle I sind offene Kupplungen mit - und eingekuppelte mit x gekennzeichnet. Das Übersetzungsverhältnis i wird in Abhängigkeit von der Standübersetzung $i_o$ angegeben.

TABELLE I

| MODE | $K_1$ | $K_2$ | $K_S$ | K | BEMERKUNG |
|---|---|---|---|---|---|
| 1 | x | x | x | x | Parksperre |
| 2 | x | x | x | - | Parksperre: $A_1$ kann laufen (z.B. für Wartungsarbeiten bei $A_1$) |
| 3 | x | x | - | x | fixes Übersetzungsverhältnis für $A_1$ und $A_3$ ; i = 1-$i_0$; Leistungsaddition (z.B. für Überholvorgang) |
| 4 | x | - | x | x | starrer Durchtrieb; i = 1; $A_1$, $A_3$ und $A_2$ können gleichzeitig arbeiten |
| 5 | - | x | x | x | Parksperre; (z.B. Batterieladung bei Fahrzeugstillstand) |
| 6 | x | x | - | - | $A_1$ weggeschaltet; rein elektrischer Betrieb durch $A_3$; $A_2$ steht; i=1-$i_0$ |
| 7 | x | - | - | x | alle Motoren benutzbar; Moment und Drehzahl stufenlos regelbar über $A_3$ und $A_2$ (z.B.Überlandbetrieb) |
| 8 | - | - | x | x | Serienhybrid, el.Antrieb über $A_2$; i = 1; Laden des Energiespeichers über $A_1$ und $A_3$ |
| 9 | - | x | x | - | Parksperre, keine Ladefunktion; Test $A_2$(Leerlauf möglich); Test $A_3$ möglich; |
| 10 | - | x | - | x | nur Ladebetrieb; keine Parksperre |
| 11 | x | - | x | - | rein el. Betrieb; i = 1; $A_3$ u. $A_2$ im Einsatz (Summierung der elektrischen Leistung) |
| 12 | x | - | - | - | CVT-Betrieb ohne $A_1$ |
| 13 | - | x | - | - | rollen (Abschleppen); kein Antrieb möglich |
| 14 | - | - | x | - | $A_2$ Betrieb möglich; i = 1 |
| 15 | - | - | - | x | Lademöglichkeit ohne Parksperre |
| 16 | - | - | - | - | alle Maschinen einzeln testbar |

Aus den möglichen Betriebszuständen der Antriebsvorrichtung sind vier Zustände mit Untervarianten hervorzuheben, wobei auch der Zustand der Kupplung K₃ (zur Feststellung der Antriebswelle 1) angegeben wird. Dies sind:

5

1. Stationärbetrieb der Arbeitsmaschine A1

(Verbrennungskraftmaschine)

1.1) Parallelhybridbetrieb

- Kupplungen K, K1 geschlossen, Kupplung K3 offen
- Kupplungen K2, KS je nach gewünschter Abtriebsdrehzahl geschlossen oder offen. Bei geschlossener Kupplung K2 ist die Antriebsmaschine A2 abgestellt.
- Regelung der Abtriebsdrehzahl mit der Arbeitsmaschine A2
- Regelung des Abtriebsmomentes mit der Arbeitsmaschine A3
- Die Verbrennungskraftmaschine A1 kann je nach Leistungsbedarf in einem Hauptbetriebspunkt (volle Leistung) oder in einem Nebenbetriebspunkt (reduzierte Leistung) betrieben werden.
- Die Drehrichtung der Arbeitsmaschine A2 ist umkehrbar.
- Die Maschinen A2 und A3 können abhängig vom Übersetzungsverhältnis sowohl als Motor (Hydromotor) als auch als Generator (Pumpe) betrieben werden.
- In dieser Betriebsart müssen bei großen Übersetzungen (geringe Abtriebsdrehzahl) große Leistungen von der Arbeitsmaschine A3 unter Zwischenschaltung des Energiespeichers S zur Arbeitsmaschine A2 fließen.

1.2) Serienhybridbetrieb

- Kupplung K1 offen, Kupplung K geschlossen, eine der Kupplungen KS oder K3 ist geschlossen.
- Die Arbeitsmaschinen A1 und A3 arbeiten als Motor-Generatoreinheit, der gesamte Antrieb wird mit der Arbeitsmaschine A2 vorgenommen.
- Wenn die Kupplung KS geschlossen ist, liegt ein starrer Durchtrieb von A2 zur Abtriebswelle vor.
- Wenn die Kupplung K3 geschlossen ist, wird die Antriebswelle 1 fixiert. Dadurch entsteht ein weiteres festes Übersetzungsverhältnis, wodurch die von A2 aufzubringenden Momente reduziert werden.
- Für niedrige Abtriebsdrehzahl bei hohem Drehmoment (Bergstrecken) ist der Serienhybridbetrieb besser geeignet als der Parallelhybridbetrieb.

2. Elektrobetrieb

2.1) Antrieb mit Arbeitsmaschine A3

- Kupplungen K und K3 geöffnet, Kupplung K1 geschlossen.
- Kupplungen K2, KS je nach gewünschter Abtriebsdrehzahl geöffnet oder geschlossen.
- Der gesamte Antrieb wird mit Arbeitsmaschine A3 durchgeführt, Maschine A2 ist in diesem Zustand abgeschaltet.

2.2) Antrieb mit Arbeitsmaschine A2

- Kupplung K1 geöffnet.
- Der Betrieb des elektrischen (hydraulischen) Teils der Antriebsvorrichtung ist identisch mit dem Betrieb als Serienhybrid. Es gelten daher die Bemerkungen zu Punkt 1.2.

3. Rein mechanischer Betrieb

- Der rein mechanische Betrieb erfordert einen Transientbetrieb der Maschine A1.
- Kupplungen K, K1 geschlossen.
- Über die Kupplungen K2, KS können zwei Übersetzungsverhältnisse gewählt werden, das Planeten-CVT-Getriebe arbeitet dann als 2-Ganggetriebe. Die Maschine A2 und A3 sind abgeschaltet und ggf. abgekuppelt.
- Dieser Betrieb ist im oberen Drehzahlbereich (Überlandfahrt) denkbar. Ebenso kann damit ein Notbetrieb bei völliger Entleerung des Energiespeichers realisiert werden.

4. Parksperre

- Wenn die Kupplungen K2 und KS gleichzeitig geschlossen sind, ist die Antriebsvorrichtung blockiert. Auf diese Art kann eine Parksperre (Feststellbremse) leicht realisiert werden.

Mit Hilfe der dargestellten Betriebszustände des erfindungsgemäßen Antriebssystems (siehe Tabelle I) lassen sich somit unterschiedliche Hybrid-Antriebsstrukturen durch einfaches Umschalten von Kupplungsstellungen realisieren. Der Vorteil dieser "Strukturvariabilität" liegt darin, daß in Abhängigkeit von einer Unzahl von Parametern die jeweils günstigste momentane Struktur aktiviert werden kann. In einem Fahrzeug, ausgerüstet mit diesem Antriebssystem, trifft ein Microprozessorsystem die Entscheidung, welche Struktur bzw. welcher Betriebszustand dem Fahrzustand des Fahrzeuges am besten entspricht. Die Entscheidungskriterien können sowohl technisch vorgeben sein, z.B. Erzielung des bestmöglichen Wirkungsgrades oder der kleinsten Emissionswerte, oder auch legistischen Hintergrund haben. Dieser Fall tritt z.B. dann ein, wenn vom Gesetzgeber der Betrieb einer Abgase emittierenden Verbrennungskraftmaschine in einer bestimmten Zone oder zu bestimmten Zeiten untersagt ist. Zur Entscheidungsfindung erfaßt das Microprozessorsystem den Fahrzustand des Fahrzeuges und die vom Fahrer eingegebenen Parameter, wobei dann mit Hilfe programmierter Kenndaten für das Antriebssystem, der vom Haupt- oder Nebenbetriebspunkt abhängigen Wirkungsgrade der Einzelkomponenten und der Ladezustände der Energiespeicher die Entscheidung über die zu schaltende Struktur und somit auch über die einzusetzende Energieform getroffen wird. Das Energiemanagement im Antriebssystem wird somit vom Microprozessorsystem übernommen.

Als weiterer Vorteil sei angeführt, daß der Energiespeicher S sowohl bei Verwendung einer Batterie als auch eines Druckspeichers von außen aufgeladen werden kann.

Weiters wird die Wirtschaftlichkeit der Antriebsvorrichtung durch die Verwendung einer Brennkraftmaschine mit zwei Betriebspunkten erhöht, da beispielsweise bei komplett aufgeladenem Energiespeicher ein Betrieb der Brennkraftmaschine im Nebenbetriebspunkt möglich ist, wodurch der Energieüberschuß im Energiespeicher abgebaut werden kann.

**Patentansprüche**

1. Antriebsvorrichtung mit einer überwiegend stationär betriebenen Brennkraftmaschine ($A_1$) und einer transient betriebenen selbständigen Arbeitsmaschine ($A_2$), welche über eine erste (1) bzw. eine zweite Antriebswelle (2) auf die Abtriebswelle (3) eines Planetengetriebes (P) arbeiten, **dadurch gekennzeichnet,** daß eine zusätzliche selbständige transient betriebene Arbeitsmaschine ($A_3$) vorgesehen ist, welche mit der ersten Antriebswelle (1) oder mit der Abtriebswelle (3) des Planetengetriebes (P) in einem festen Drehzahlverhältnis steht, daß die beiden transient betriebenen Arbeitsmaschinen ($A_2$, $A_3$) mit einer Regeleinrichtung (R) in Verbindung stehende Hydro- oder Elektromaschinen sind, wobei eine Einrichtung (E) für einen hydraulischen oder elektrischen Kraftfluß zwischen den beiden transient betriebenen Arbeitsmaschinen ($A_2$, $A_3$) vorgesehen ist, welche einen hydraulischen oder elektrischen Energiespeicher (S) aufweist, und die beiden transient betriebenen Arbeitsmaschinen ($A_2$, $A_3$) unabhängig voneinander betreibbar sind.

2. Antriebsvorrichtung nach Anspruch 1, **dadurch gekennzeichnet**, daß die überwiegend stationär betriebene Brennkraftmaschine ($A_1$) zwei Betriebspunkte, nämlich einen Haupt- und einen Nebenbetriebspunkt, mit unterschiedlicher Leistungsabgabe aufweist.

3. Antriebsvorrichtung nach Anspruch 1 oder 2, dadurch gekennzeichnet, daß zumindest die überwiegend stationär betriebene Brennkraftmaschine ($A_1$), ggf. alle Arbeitsmaschinen ($A_2$, $A_3$) durch Kupplungen (K, $K_1$) vom Planetengetriebe (P) abtrennbar sind.

4. Antriebsvorrichtung nach einem der Ansprüche 1 bis 3, dadurch gekennzeichnet, daß zumindest eine der Arbeitsmaschinen ($A_1$, $A_2$, $A_3$) über eine Getriebestufe ($G_2$, $G_3$) mit dem Planetengetriebe (P) in Verbindung steht.

5. Antriebsvorrichtung nach einem der Ansprüche 1 bis 4, dadurch gekennzeichnet, daß Kupplungen ($K_2$, $K_3$) vorgesehen sind, mit welchen zumindest eine Antriebswelle (1, 2) des Planetengetriebes (P) feststellbar ist.

EP 0 552 140 B1

6. Antriebsvorrichtung nach einem der Ansprüche 1 bis 5, dadurch gekennzeichnet, daß eine Kupplung (K$_s$) vorgesehen ist, mit welcher die zweite Antriebswelle (2) mit der Abtriebswelle (3) des Planetengetriebes (P) drehfest verbindbar ist.

7. Antriebsvorrichtung nach einem der Ansprüche 1 bis 6, dadurch gekennzeichnet, daß die überwiegend stationär betriebene Arbeitsmaschine (A$_1$) über Kupplungen (K, K$_1$) mit dem Sonnenrad und die erste transient betriebene Arbeitsmaschine (A$_2$) über eine Getriebestufe (G$_2$) mit dem Kronenrad des Planetengetriebes (P) in Verbindung stehen, sowie daß die zweite transient betriebene Arbeitsmaschine (A$_3$) über eine Getriebestufe (G$_3$) auf die Sonnenradwelle (1) arbeitet.

8. Antriebsvorrichtung nach einem der Ansprüche 1 bis 7, **dadurch gekennzeichnet**, daß die Regeleinrichtung (R) zum teilweise automatisierten Betrieb der Antriebsvorrichtung in einem Fahrzeug ein Microprozessorsystem aufweist, in welchem Kenndaten über alle Elemente der Antriebsvorrichtung abgelegt sind und welches eingangsseitig mit Sensoren zur Erfassung des Fahrzustandes des Fahrzeuges und des Ladezustandes des Energiespeichers (S) sowie mit einer Eingabevorrichtung zur Eingabe von Betriebsparametern von außen, beispielsweise durch Telemetrie oder durch den Fahrer verbunden ist, sowie daß der Microprozessor ausgangsseitig mit Stellgliedern zur Regelung der Arbeitsmaschinen (A$_1$, A$_2$, A$_3$) sowie für das Schalten der Kupplungen (K, K$_1$, K$_2$, K$_3$, K$_s$) verbunden ist.

**Claims**

1. A propulsion system with an internal combustion engine (A$_1$) predominantly operating in a steady-state mode and an independent driving engine (A$_2$) operating in a transient mode, which act on the output shaft (3) of a planetary gear train (P) via a first (1) and second drive shaft (2), **characterized in that** an additional independent driving engine operating in a transient mode (A$_3$) is provided, which has a fixed r.p.m. ratio with the first drive shaft (1), or with the output shaft (3) of the planetary gear train (P), and that the two transient engines (A$_2$, A$_3$) are configured as hydraulic engines or electric engines connected to a control device (R), a unit (E) being provided for a hydraulic or electric power flow between the two transient engines (A$_2$, A$_3$), which in turn is provided with an energy storage device (S), and that the two transient engines (A$_2$, A$_3$) can be operated independently of each other.

2. A propulsion system as in claim 1, **characterized in that** the predominantly steady-state internal combustion engine (A$_1$) operates in two operating points, i.e., a first and a second operating point, with different power outputs.

3. A propulsion system as in claim 1 or 2, **characterized in that** at least the predominantly steady-state internal combustion engine (A$_1$), or, if so required, all driving engines (including A$_2$, A$_3$), are made separable from the planetary gear train (P) by means of couplings (K, K$_1$).

4. A propulsion system as in any of claims 1 to 3, **characterized in that** at least one of the driving engines (A$_1$, A$_2$, A$_3$) is connected with the planetary gear train (P) via an additional gear (G$_2$, G$_3$).

5. A propulsion system as in any of claims 1 to 4, **characterized in that** couplings (K$_2$, K$_3$) are provided for locking at least one drive shaft (1, 2) of the planetary gear train (P).

6. A propulsion system as in any of claims 1 to 5, **characterized in that** a coupling (K$_s$) is provided by which the second drive shaft (2) is connected to the output shaft (3) of the planetary gear train (P).

7. A propulsion system as in any of claims 1 to 6, **characterized in that** the predominantly steady-state driving engine (A$_1$) is connected via couplings (K, K$_1$) to the sun gear, and the first transiently operating engine (A$_2$) is connected via an additional gear (G$_2$) to the ring gear of the planetary gear train (P), and that the second transiently operating engine (A$_3$) acts on the shaft (1) of the sun gear via an additional gear (G$_3$).

8. A propulsion system as in any of claims 1 to 7, **characterized in that** the control device (R) for partly automatized operation of the propulsion system in a vehicle is provided with a microprocessor unit storing the characteristics of all elements of the propulsion system, which receives inputs from sensors registering the state of motion of the vehicle and the charge condition of the energy storage (S), and

8

data from an input device for entering operational parameters from outside, for instance by telemetric processes or by the driver, and that the output of the microprocessor actuates elements for control of the driving engines ($A_1$, $A_2$, $A_3$) and for activating the couplings (K, $K_1$, $K_2$, $K_3$, $K_s$).

## Revendications

1. Mécanisme de commande comprenant un moteur à combustion interne ($A_1$) mu principalement de manière fixe et un moteur de travail ($A_2$) autonome mu de manière transitoire, moteurs qui opèrent par l'intermédiaire d'un premier (1) ou d'un deuxième arbre d'entrée (2) sur l'arbre de sortie (3) d'une boîte à engrenages planétaires (P), caractérisé en ce que il est prévu un moteur de travail additionnel ($A_3$) autonome mu de façon transitoire, qui est dans un rapport fixe de nombre de trous avec le premier arbre d'entrée (1) ou avec l'arbre de sortie (3) de la boîte d'engrenages planétaires P, en ce que les deux moteurs de travail ($A_2$, $A_2$) mus de manière transitoire sont des hydro ou électromoteurs se trouvant en liaison avec un dispositif régulateur (R), tandis qu'il est prévu un dispositif (E) pour un flux de force hydraulique ou électrique entre les deux moteurs de travail ($A_2$, $A_3$) actionnés de manière transitoire, dispositif (E) qui comportent un stockage d'énergie (S) hydraulique ou électrique et les deux moteurs de travail actionnés de manière transitoire ($A_2$, $A_2$) peuvent être actionnés indépendamment l'un de l'autre.

2. Mécanisme de commande selon la revendication 1, caractérisé en ce le moteur à combustion interne ($A_1$) actionné principalement de manière fixe comprend deux points de fonctionnement, en fait un point de fonctionnement principal et un point de fonctionnement secondaire, avec une puissance utile différente.

3. Mécanisme de commande selon une les revendications 1 ou 2, caractérisé en ce qu'au moins le moteur à combustion interne ($A_1$ actionné principalement de manière fixe, éventuellement tous les moteurs de travail ($A_2$, $A_3$) peuvent être désaccouplés de la boîte d'engrenages planétaires (P) par des embrayages (K, $K_1$)

4. Mécanisme de commande selon une des revendications 1 à 3, caractérisé en ce qu'au moins un des moteurs de travail ($A_1$, $A_2$, $A_3$) est en liaison par un étage de transmission ($G_2$, $G_3$) avec la boîte d'engrenages planétaires P.

5. Mécanisme de commande selon une des revendications 1 à 4, caractérisé en ce que sont prévus des accouplements ($K_2$, $K_3$), avec lesquels on peut bloquer au moins un arbre de sortie (1, 2) de la boîte d'engrenages planétaires (P).

6. Mécanisme de commande selon une des revendications 1 à 5, caractérisé en ce qu'est prévu un accouplement ($K_S$), avec lequel le deuxième arbre d'entrée (2) peut être relié solidairement en rotation avec l'arbre de sortie (3) de la boîte d'engrenages planétaires (P).

7. Mécanisme de commande selon une des revendications 1 à 6, caractérisé en ce que le moteur de travail (A1) actionné principalement de manière fixe se trouve relié par des embrayages (K, $K_1$) à la roue solaire et le premier moteur de travail ($A_2$) actionné de manière transitoire se trouve en liaison par un étage de transmission ($G_2$) avec la roue de chant de la boîte d'engrenages planétaires (P) et en ce que le deuxième moteur de travail ($A_3$) mu de manière transitoire agit par un degré de transmission ($G_3$) sur l'arbre (1) de la roue solaire.

8. Mécanisme de commande selon une des revendications 1 à 7, caractérisé en ce que le dispositif de régulation (R) comporte pour l'actionnement partiellement automatisé du dispositif de commande dans un véhicule un système de microprocesseur, dans lequel sont classées les données caractéristiques de tous les éléments du mécanisme de commande et qui est en liaison du côté entrée avec des capteurs pour détecter l'état de marche du véhicule et l'état de charge du stockage d'énergie (S) ainsi qu'avec un dispositif d'entrée pour l'introduction des paramètres de fonctionnement de l'extérieur, par exemple par télémétrie ou à l'aide du conducteur, et en ce que le microprocesseur du côté sortie est en communication avec des organes de réglage pour la régulation des moteurs de travail ($A_1$, $A_2$, $A_3$) ainsi que pour la commutation des embrayages (K, $K_1$, $K_2$, $K_3$, $K_S$).

Fig.1

Fig.2

Fig.3

*Fig. 4*

*A₂*

*G₂*

*P*

*A₁*

*1*

*2*

*3*

*G₃*

*A₃*

*A₂*

*G₂*

*K₂*

*P*

*K*

*K₁*

*Kₛ*

*A₁*

*2*

*K₃*

*G₃*

*A₃*

*Fig. 5*

11